# EUROPÄISCHE PATENTSCHRIFT

(11) **EP 2 498 965 B1**
(45) Veröffentlichungstag und Bekanntmachung des Hinweises auf die Patenterteilung: **28.08.2013**
(21) Anmeldenummer: 10771663.1
(22) Anmeldetag: 23.10.2010
(51) Int. Cl.: B29C 33/06, B29C 35/08, B29C 70/34, B29C 70/44, H01L 35/00, H05B 6/64

(54) **VERFAHREN ZUM HERSTELLEN EINES BAUTEILS AUS EINEM FASERVERSTÄRKTEN WERKSTOFF**
METHOD OF PRODUCING AN ARTICLE OF FIBER-REINFORCED MATERIAL
PROCEDE DE FABRICATION D'UN COMPOSANT D'UN MATÉRIAU RENFORCÉ PAR FIBRE

(30) Priorität: 13.11.2009 DE 102009052835
(43) Veröffentlichungstag der Anmeldung: 19.09.2012
(73) Patentinhaber: Dr. Ing. h.c.F. Porsche Aktiengesellschaft, 70435 Stuttgart (DE); Karlsruher Institut für Technologie, 76131 Karlsruhe (DE)
(72) Erfinder: ERB, Thiemo, 70182 Stuttgart (DE); FEHER, Lambert, 76297 Stutensee (DE)
(74) Vertreter: Sturm, Christoph
(86) Internationale Anmeldenummer: PCT/EP2010/006494
(87) Internationale Veröffentlichungsnummer: WO 2011/057712

(56) Entgegenhaltungen:
- WO-A2-2008/061823
- DE-C1- 10 013 409
- JP-A- 2 182 438

## Beschreibung

Die Erfindung betrifft ein Verfahren zum Herstellen eines Bauteils aus einem faserverstärkten Werkstoff nach dem Oberbegriff des Anspruchs 1.

Aus der DE 103 26 021 A1 ist ein Verfahren zum Herstellen eines Bauteils aus einem faserverstärkten Werkstoff nach dem Oberbegriff des Anspruchs 1 bekannt, wobei das Faserhalbzeug nach außen hin gegenüber dem Werkzeug durch eine Vakuumfolie abgedeckt und abgedichtet wird. Zwischen dem Faserhalbzeug und der Vakuumfolie ist einerseits ein Verteilergewebe und andererseits eine Trennfolie positioniert, wobei die Trennfolie zwischen dem Verteilergewebe und dem Faserhalbzeug und das Verteilergewebe zwischen der Vakuumfolie und der Trennfolie positioniert ist. Nach der DE 103 26 021 A1 wird dem Faserhalbzeug über das Verteilergewebe flüssiges Harz zur Imprägnierung des Faserhalbzeug zugeführt, nämlich mittels einer Unterdruckbeaufschlagung.

Weitere Verfahren zum Herstellen eines Bauteils sind aus der DE 100 13 409 C1, der JP 2 182 438 A und der WO 2008/061823 A2 bekannt.

Hiervon ausgehend liegt der vorliegenden Erfindung das Problem zu Grunde ein neuartiges Verfahren zum Herstellen eines Bauteils aus einem faserverstärkten Werkstoff zu schaffen. Dieses Problem wird durch ein Verfahren gemäß Patentanspruch 1 gelöst. Beim erfindungsgemäßen Verfahren zum Herstellen eines Bauteils aus einem faserverstärkten Werkstoff wird ein Faserhalbzeug, das aus Fasern und einer ungehärteten Kunststoffmatrix besteht, auf einem Werkzeug positioniert, wobei auf dem Faserhalbzeug und/oder auf dem Werkzeug eine thermoelektrische Folie positioniert wird, die bei Anliegen eines Unterdrucks oder Vakuums durch Mikrowellenbestrahlung erhitzt wird und die in Folge dessen das Faserhalbzeug unter Aushärtung der Kunststoffmatrix erhitzt.

Vorteilhafte Weiter bildungen der Erfindung sind Gegenstand der abhängigen Ansprüche.

Mit der hier vorliegenden Erfindung wird ein völlig neuartiges Verfahren zum Herstellen eines Bauteils aus einem faserverstärktem Werkstoff vorgeschlagen. Nach dem erfindungsgemäßen Verfahren wird als Faserhalbzeug ein Halbzeug verwendet, das aus Fasern und einer ungehärteten Kunststoffmatrix besteht. Mithilfe der thermoelektrischen Folie, die auf dem Faserhalbzeug und/oder auf dem Werkzeug positioniert wird, wird das Faserhalbzeug unter Aushärten der Kunststoffmatrix das Faserhalbzeug erhitzt, wobei die thermoelektrische Folie, die dem Erhitzen des Faserhalbzeug zur Aushärtung desselben dient, durch Mikrowellenbestrahlung bei Anliegen eines Unterdrucks oder Vakuums erhitzt wird.

Eine thermoelektrische Folie im Sinne der Erfindung ist demnach eine Folie, die ausgelöst durch Mikrowellenbestrahlung und demnach über eine elektromagnetische Kopplung an Mikrowellenstrahlung eine thermische Wirkung hat, also Wärme abgibt. In eine thermoelektrische Folie im Sinne der Erfindung ist demnach durch Mikrowellenbestrahlung elektrische Energie eintragbar, die von der thermoelektrischen Folie in thermische Energie gewandelt und als Wärme abgegeben wird.

Ein solches Verfahren zum Herstellen eines Bauteils aus einem faserverstärkten Werkstoff stellt eine völlig neue Vorgehensweise bereit, mit welchem sich faserverstärkte Bauteile besonders einfach und zuverlässig in hoher Qualität herstellen lassen.

Vorzugsweise wird als thermoelektrische Folie eine segmentierte thermoelektrische Folie verwendet, die ausschließlich im Bereich von definierten ersten Segmenten durch die Mikrowellenbestrahlung erhitzt wird, wohingegen dieselbe im Bereich von definierten zweiten Segmenten nicht durch die Mikrowellenbestrahlung erhitzt wird.

Dann, wenn als thermoelektrische Folie eine derart segmentierte, thermoelektrische Folie verwendet wird, kann ein gezieltes Erwärmen des Faserhalbzeugs in geometrisch definierten Bereichen erfolgen. Dadurch können an definierten, geometrischen Bereichen des Faserhalbzeugs und damit des späteren Bauteils gezielte Eigenschaften hergestellt werden. Weiterhin kann eine lokale Überhitzung des Faserhalbzeugs beim Mikrowellenbestrahlen vermieden werden.

Nach einer vorteilhaften Weiterbildung der Erfindung wirkt die thermoelektrische Folie zusätzlich als Vakuumfolie, die gegenüber dem Werkzeug derart abgedichtet wird, dass zwischen dem Werkzeug und der thermoelektrischen Folie ein Unterdruck oder ein Vakuum einstellbar ist, wobei zur Aushärtung der Kunststoffmatrix des Faserhalbzeugs über die Mikrowellenbestrahlung zwischen dem Werkzeug und der thermoelektrischen Folie ein Unterdruck oder ein Vakuum eingestellt wird.

Nach einer weiteren, alternativen vorteilhaften Weiterbildung der Erfindung wird zusätzlich zur thermoelektrische Folie eine separate Vakuumfolie verwendet und gegenüber dem Werkzeug derart abgedichtet, dass zwischen dem Werkzeug und der Vakuumfolie ein Unterdruck oder ein Vakuum einstellbar ist, und wobei zur Aushärtung der Kunststoffmatrix des Faserhalbzeugs über die Mikrowellenbestrahlung zwischen dem Werkzeug und Vakuumfolie ein Unterdruck oder ein Vakuum eingestellt wird.

Dann, wenn die verstehend genannte, vorteilhafte Weiterbildung der Erfindung zum Einsatz kommt, kann auf eine separate Vakuumfolie verzichtet werden, da dann die thermoelektrische Folie zusätzlich als Vakuumfolie wirkt. In diesem Fall kann das Verfahren vereinfacht und kostengünstiger gestaltet werden.

Ausführungsbeispiele der Erfindung werden, ohne hierauf beschränkt zu sein, an Hand der Zeichnung näher erläutert. Dabei zeigt:
- Fig. 1: eine schematische seitliche Ansicht einer Anordnung zur Verdeutlichung eines ersten Ausführungsbeispiels eines erfindungsgemäßen Verfahrens zum Herstellen eines Bauteils aus einem faserverstärkten Werkstoff;
- Fig. 2: eine schematische seitliche Ansicht einer Anordnung zur Verdeutlichung eines zweiten Ausführungsbeispiels eines erfindungsgemäßen Verfahrens zum Herstellen eines Bauteils aus einem faserver-stärkten Werkstoff;
- Fig. 3: eine schematische seitliche Ansicht einer Anordnung zur Verdeutlichung eines dritten Ausführungsbeispiels eines erfindungsgemäßen Verfahrens zum Herstellen eines Bauteils aus einem faserverstärkten Werkstoff; und
- Fig. 4: eine schematische seitliche Ansicht einer Anordnung zur Verdeutlichung eines vierten Ausführungsbeispiels eines erfindungsgemäßen Verfahrens zum Herstellen eines Bauteils aus einem faserverstärkten Werkstoff.

Die hier vorliegende Erfindung betrifft ein Verfahren zum Herstellen eines Bauteils aus einem faserverstärkten Werkstoff, zum Beispiel aus einem kohlefaserverstärkten oder glasfaserverstärktem Werkstoff.

Erfindungsgemäß wird ein Faserhalbzeug, das aus Fasern und einer ungehärteten Kunststoffmatrix, insbesondere einer ungehärteten, duroplastischen Kunststoffmatrix besteht, auf einem Werkzeug positioniert, wobei auf dem Faserhalbzeug und/oder auf dem Werkzeug eine thermoelektrische Folie positioniert wird. Diese Anordnung wird bei Anliegen eines Unterdrucks oder Vakuums mikrowellenbestrahlt, wobei sich in Folge der Mikrowellenbestrahlung die thermoelektrische Folie erhitzt, um so das Faserhalbzeug unter Aushärtung der Kunststoffmatrix zu erhitzen.

Dann, wenn das Faserhalbzeug Endlosfasern aufweist, wird das Faserhalbzeug auch als Prepreg bezeichnet. Dann hingegen, wenn das Faserhalbzeug kürzere Fasern aufweist, wird dasselbe als BMC (Bulk Moulding Compound) oder als SMC (Sheet Moulding Compound) bezeichnet.

Wie bereits erwähnt, kann es sich bei den Fasern des Faserhalbzeugs um Glasfasern oder Kohlestofffasern oder alternativ auch um Aramidfasern handeln. Die Kunststoffmatrix des Faserhalbzeugs besteht vorzugsweise auf Epoxydharzbasis oder Vinylesterbasis.

Es liegt demnach im Sinne der hier vorliegenden Erfindung, ein Bauteil aus einem faserverstärkten Werkstoff dadurch herzustellen, dass ein Faserhalbzeug aus in einer ungehärteten Kunststoffmatrix eingebetteten Fasern über Mikrowellenbestrahlung ausgehärtet wird, wozu die thermoelektrische Folie, die entweder auf dem Faserhalbzeug oder auf dem Werkzeug positioniert ist, durch Mikrowellenbestrahlung erhitzt wird, wobei die so durch Mikrowellenbestrahlung erhitzte, thermoelektrische Folie dann die zu härtende Kunststoffmatrix des Faserhalbzeugs unter Aushärtung der Kunststoffmatrix erhitzt.

Eine thermoelektrische Folie im Sinne der Erfindung ist demnach eine Folie, die ausgelöst durch eine Mikrowellenbestrahlung und demnach über eine elektromagnetische Kopplung an die Mikrowellenbestrahlung eine thermische Wirkung hat, also Wärme abgibt. In eine thermoelektrische Folie im Sinne der Erfindung ist demnach durch Mikrowellenbestrahlung elektrische Energie eintragbar, die von der thermoelektrischen Folie in thermische Energie gewandelt und als Wärme abgegeben wird.

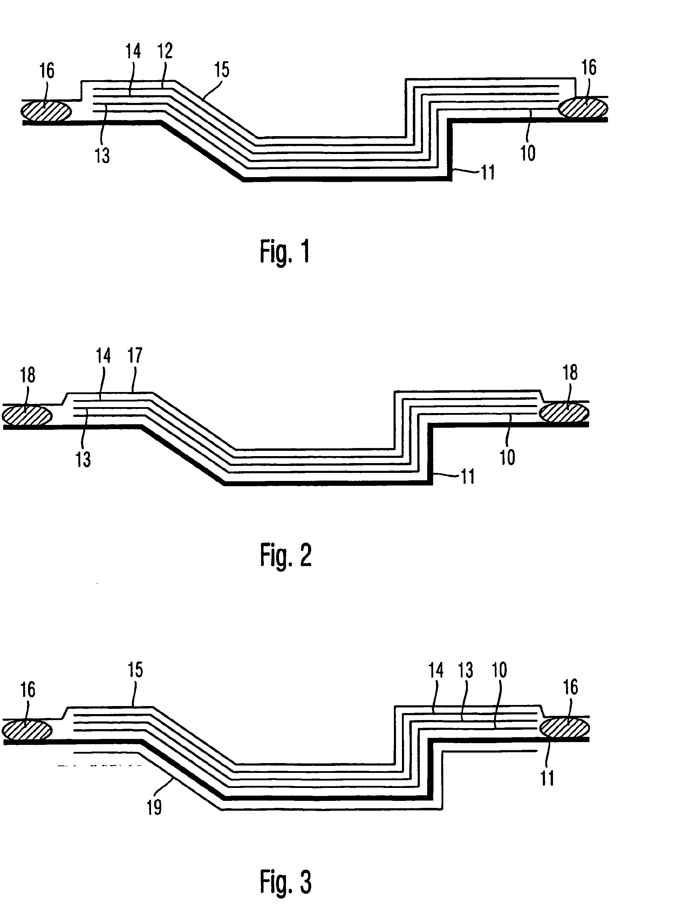

Details des erfindungsgemäßen Verfahrens werden nachfolgend unter Bezugnahme auf die Ausführungsbeispiele der Fig. 1 bis 5 beschrieben.

Fig. 1 verdeutlicht ein erstes Ausführungsbeispiel des erfindungsgemäßen Verfahrens zum Herstellen eines Bauteils aus einem faserverstärkten Werkstoff. Gemäß dem Ausführungsbeispiel der Fig. 1 wird ein Faserhalbzeug 10 auf einer ersten Seite eines Werkzeugs 11 positioniert, wobei in Fig. 1 eine thermoelektrische Folie 12 auf dem Faserhalbzeug 10 positioniert wird, nämlich unter Zwischenanordnung einer Trennfolie 13 und eines Vlieses 14 zwischen dem Faserhalbzeug 10 und der thermoelektrischen Folie 12.

Ober die Trennfolie 13 wird verhindert, dass beim Aushärten der Kunststoffmatrix des Faserhalbzeugs 10 mit demselben das Vlies 14 verklebt. Ober das Vlies 14 ist es möglich, zum Anlegen eines Unterdrucks oder Vakuums Luft aus dem Bereich des Faserhalbzeugs 10 abzuführen.

Zur Bereitstellung des Unterdrucks bzw. des Vakuums wird im Ausführungsbeispiel der Fig. 1 eine separate Vakuumfolie 15 verwendet und gegenüber dem Werkzeug 11 an einem Randbereich 16 derart abgedichtet, dass zur Aushärtung der Kunststoffmatrix des Faserhalbzeugs 10 zwischen dem Werkzeug 10 und der Vakuumfolie 15 und damit im Bereich des Faserhalbzeugs 10 ein Vakuum oder ein Unterdruck eingestellt werden kann. Gemäß Fig. 1 wird dabei die Vakuumfolie 15 unmittelbar auf der thermoelektrischen Folie 12 positioniert, wobei die thermoelektrische Folie 12 zwischen der Vakuumfolie 15 und dem Faserhalbzeug 10, nämlich in Fig. 1 zwischen der Vakuumfolie 15 und dem Vlies 14, positioniert ist.

Fig. 2 verdeutlicht eine zweite Ausführungsform der Erfindung, in welcher auf eine separate Vakuumfolie verzichtet wird, wobei im Ausführungsbeispiel der Fig. 2 eine thermoelektrische Folie 17 verwendet wird, die gleichzeitig bzw. zusätzlich als Vakuumfolie wirkt.

Die auch als Vakuumfolie wirkende, thermoelektrische Folie 17 wird gemäß Fig. 2 gegenüber dem Werkzeug 11 an einem Randbereich 18 derselben abgedichtet, sodass zur Aushärtung der Kunststoffmatrix des Faserhalbzeugs 10 zwischen dem Werkzeug 11 und der thermoelektrischen Folie 17 und damit im Bereich des Faserhalbzeugs 10 ein Unterdruck oder ein Vakuum eingestellt werden kann. In der Ausführungsform der Fig. 2 sind zwischen der thermoelektrischen Folie 17 und dem Faserhalbzeug 10 wiederum die Trennfolie 13 und das Vlies 14 positioniert.

Eine weitere Ausführungsform des erfindungsgemäßen Verfahrens zum Herstellen eines Bauteils aus einem faserverstärkten Werkstoff zeigt Fig. 3. Im Ausführungsbeispiel der Fig. 3 wird wiederum eine separate Vakuumfolie 15 verwendet, die an Randbereichen 16 derselben gegenüber dem Werkzeug 11 angedichtet ist, wobei zwischen der separaten Vakuumfolie 15 und dem Werkzeug 11 das Faserhalbzeug 10, die Trennfolie 13 und das Vlies 14 positioniert sind, nämlich derart, dass das Faserhalbzeug 10 auf der ersten Seite des Werkzeugs 11 positioniert ist, das auf dem Faserhalbzeug 10 die Trennfolie 13 und auf der Trennfolie 13 das Vlies 14 positioniert ist, wobei sich die Vakuumfolie 15 an das Vlies 14 außen anschließt.

Im Ausführungsbeispiel der Fig. 3 ist eine thermoelektrische Folie 19 nicht auf dem Faserhalbzeug 10 positioniert, sondern vielmehr auf dem Werkzeug 11, nämlich auf einer zweiten Seite desselben, die der ersten Seite des Werkzeugs 11 gegenüberliegt und damit vom Faserhalbzeug 10 abgewandt ist. In der Ausführungsvariante der Fig. 3 wird durch Mikrowellenbestrahlung wiederum die thermoelektrische Folie 19 erhitzt, die dann das Werkzeug 11 und über das Werkzeug 11 zur Aushärtung der Kunststoffmatrix des Faserhalbzeugs 10 das Faserhalbzeug 10 erhitzt.

In diesem Fall kann die thermoelektrische Folie 19 dauerhaft mit dem Werkzeug 11 verbunden sein, zum Beispiel durch Verkleben oder durch Vulkanisieren.

Eine weitere Alternative der Erfindung ergibt sich dadurch, dass die Ausführungsbeispiele der Fig. 2 und 3 miteinander kombiniert werden, dass also in Fig. 3 auf die separate Vakuumfolie 15 verzichtet wird.

In dieser Variante erstreckt sich dann die thermoelektrische Folie 19 auch auf der ersten Seite des Werkzeugs 11 und umgibt demnach das Werkzeug 11 allseitig, sodass dann zum Aushärten der Kunststoffmatrix des Faserhalbzeugs 10 zwischen der thermoelektrischen Folie 19 und dem Werkzeug 11 ein Unterdruck bzw. Vakuum eingestellt werden kann.

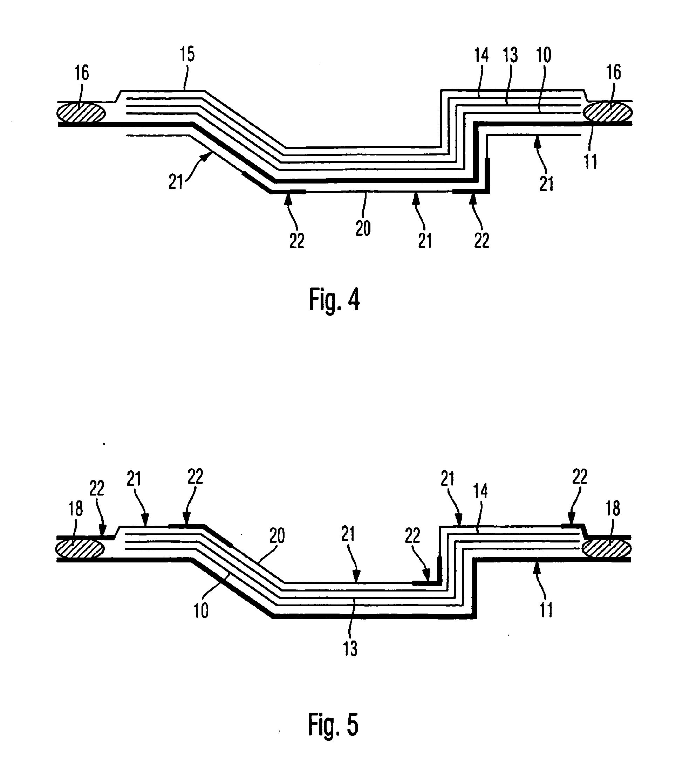

Ausgehend von der Ausführungsform von Fig. 3 visualisiert Fig. 4 eine weitere Variante der Erfindung. So kommt beim Ausführungsbeispiel der Fig. 4 eine thermoelektrische Folie 20 zum Einsatz, die segmentiert ist, wobei die segmentierte, thermoelektrische Folie 20 in ersten Segmenten 21 durch Mikrowellenbestrahlung erhitzt und in zweiten Segmenten 22 durch Mikrowellenbestrahlung nicht erhitzt werden kann. Die zweiten Segmente 22 der thermoelektrischen Folie 20 dienen dann vorzugsweise ausschließlich der Wärmeleitung.

In diesem Fall ist es möglich, zum Aushärten der Kunststoffmatrix des Faserhalbzeugs 10 dasselbe in definierten Bereichen einer anderen Erhitzung bzw. Erwärmung auszusetzen als in anderen definierten Bereichen, um so definierte Eigenschaften des herzustellenden Bauteils herzustellen oder eine lokale Überhitzung des Faserhalbzeugs 10 beim Aushärten zu vermeiden.

Fig. 5 zeigt eine Variante der Erfindung, in welcher eine segmentierte, thermoelektrische Folie 20 mit den durch Mikrowellenbestrahlung erhitzbaren, ersten Segmenten 21 und den durch die Mikrowellenbestrahlung nicht erhitzbaren, zweiten Segmenten 22 im Unterschied zu Fig. 4 nicht im Bereich der zweiten Seite auf das Werkzeug 11 aufgebracht ist, sondern in Übereinstimmung zum Ausführungsbeispiel der Fig. 2 auf der ersten Seite und damit auf dem Faserhalbzeug 10 unter Zwischenanordnung der Trennfolie 13 sowie des Vlieses 14.

Es sei darauf hingewiesen, dass es sich bei der Trennfolie 13 sowie beim Vlies 14 um optionale Baugruppen handelt. So ist es möglich, an Stelle der Trennfolie 13 und des Vlieses 14 eine Folie zwischen dem Faserhalbzeug 10 und der thermoelektrischen Folie 12, 17 bzw. 20 oder zwischen dem Faserhalbzeug 10 und der separaten Vakuumfolie 15 zu positionieren, die sowohl die Funktion der Trennfolie 13 als auch die Funktion des Vlieses 14 übernimmt.

Weiterhin kann die Funktion der Trennfolie 13 sowie des Vlieses 14 auch unmittelbar von der thermoelektrischen Folie 12, 17 bzw. 20 oder von der separaten Vakuumfolie 15 übernommen werden, so dass dann auf eine separate Trennfolie 13 und ein separates Vlies 14 vollständig verzichtet werden kann.

Zur Mikrowellenbestrahlung und damit zum Mikrowellenhärten der Kunststoffmatrix des Faserhalbzeugs 10 werden die Anordnungen der Fig. 1 bis 5 vorzugsweise in einem Mikrowellenofen positioniert, wobei die Leistung desselben zum Beispiel über in den Mikrowellenofen eingebrachte Thermoelemente geregelt werden kann. Die zum Aushalten der Kunststoffmatrix des Faserhalbzeugs 10 benötigte Leistung kann jedoch auch vorab empirisch ermittelt werden, wobei dann keine Regelung derselben erfolgt.

Die im Zusammenhang mit dem erfindungsgemäßen Verfahren eingesetzte, thermoelektrische Folie 12, 17, 19 bzw. 20 besteht vorzugsweise aus einem polymeren Grundwerkstoff, vorzugsweise auf einer mikrowellenpermeablen Kautschukbasis oder Silikonbasis. Die thermoelektrische Folie ist vorzugsweise ausreichend drapierfähig oder wird durch Urformen auf die Geometrie des mit dem erfindungsgemäßen Verfahren herzustellenden Bauteils vorgeformt.

Die thermoelektrische Folie kann beliebig häufig verwendet werden.

Durch Beimischung mikrowellenaktiver Additive in den polymeren Grundwerkstoff der thermoelektrischen Folie, die vorzugsweise homogen im polymeren Grundwerkstoff derselben verteilt sind und sich im thermischen Erwärmungsverhalten inert auf die polymere Kettigkeit des polymeren Grundwerkstoffs verhalten, kann die gesamte thermoelektrische Folie als semipermeabler Verbraucher für die Mikrowellenstrahlung dienen, um einen Wärmeeintrag in die .zu härtende Kunststoffmatrix des Faserhalbzeugs hervorzurufen.

Zum anderen dient die thermoelektrische Folie als umhüllende Isotherme, die das zu härtende Faserhalbzeug gleichmäßig umschließt. Die thermoelektrische Folie isoliert dann in ihren eingestellten Materialeigenschaften das umschlossene Faserhalbzeug von der Umwelt des Mikrowellenofens thermisch und wirkt gegebenenfalls gleichzeitig als Vakuumfolie. Da ein polymerer Grundwerkstoff auf Kautschukbasis oder Silikonbasis eine relativ geringe Wärmeleitfähigkeit aufweist, kann die Wärmeleitfähigkeit der thermoelektrischen Folie durch Beimischung von Additiven verbessert werden. Als Additive können hier Mischungen aus mikro- oder nanoskaligem Kohlenstoff, zum Beispiel Ruß oder Graphen, mikro- oder nanoskaligem ferro- und ferrimagnetisch absorbierenden Ionenverbindungen, wie zum Beispiel Eisenoxiden oder hydrozyklische bzw. hydrocyclische, aromatische Beimischungen mit mikrowellenaktiven Aminogruppen Verwendung finden. Durch solche Additive kann insbesondere eine Wärmeausbreitung durch Diffusion verbessert werden. Ferner kann über die Additive das Ankopplungsverhalten an die Mikrowellenbestrahlung verbessert und gezielt eingestellt werden.

Zur Ausbildung der in den Ausführungsbeispielen der Fig. 4 und 5 verwendeten, segmentierten, thermoelektrischen Folie können in den polymeren Grundwerkstoff derselben unterschiedliche Additive oder komplementäre Additive eingelagert sein. So kann durch die Beimengung von Metallpulvern innerhalb der thermoelektrischen Folie ein Segment derselben ausgebildet werden, welches keiner Mikrowellenerwärmung unterliegt und lediglich der Wärmeleitung dient. Durch die segmentierte Einlagerung unterschiedliche bzw. komplementärer Additive kann demnach eine thermoelektrische Folie mit den unterschiedlichen Segmenten, also den ersten bei Mikrowellenbestrahlung erhitzbaren Segmenten und den zweiten, bei Mikrowellenbestrahlung nicht erhitzbaren Segmenten, bereitgestellt werden.

Als Werkzeug 11 kann ein Werkzeug aus mikrowellenpermeablen, organischen Materialien, wie zum Beispiel aus Keramiken, Beton oder Zement, aus Kompositmaterialien, wie zum Beispiel mikrowellenpermeablen Glasfaserkompositen, aus absorbierenden Werkstoffen, wie zum Beispiel Silikonhydrid, oder aus mikrowellenreflektierenden Materialien, wie zum Beispiel Aluminium oder Stahl oder Magnesium oder Kupfer oder Invar, zum Einsatz kommen. Weiterhin kann ein Werkzeug aus einem Polymer, wie z.B. Ureol, gefertigt sein.

### Bezugszeichenliste

- 10: Faserhalbzeug
- 11: Werkzeug
- 12: thermoelektrische Folie
- 13: Trennfolie
- 14: Vlies
- 15: Vakuumfolie
- 16: Randbereich
- 17: thermoelektrische Folie
- 18: Randbereich
- 19: thermoelektrische Folie
- 20: thermoelektrische Folie
- 21: Segment
- 22: Segment

## Patentansprüche

1. Verfahren zum Herstellen eines Bauteils aus einem faserverstärkten Werkstoff, wobei ein Faserhalbzeug, das aus Fasern und einer ungehärteten Kunststoffmatrix besteht, auf einem Werkzeug positioniert wird, **dadurch gekennzeichnet, dass** auf dem Faserhalbzeug und/oder auf dem Werkzeug eine thermoelektrische Folie positioniert wird, die bei Anliegen eines Unterdrucks oder Vakuums durch Mikrowellenbestrahlung erhitzt wird und die in Folge dessen das Faserhalbzeug unter Aushärtung der Kunststoffmatrix erhitzt.

2. Verfahren nach Anspruch 1, **dadurch gekennzeichnet, dass** das Faserhalbzeug unmittelbar auf einer ersten Seite des Werkzeugs positioniert wird.

3. Verfahren nach Anspruch 1 oder 2, **dadurch gekennzeichnet, dass** die thermoelektrische Folie unmittelbar auf dem Faserhalbzeug positioniert wird.

4. Verfahren nach Anspruch 1 oder 2, **dadurch gekennzeichnet, dass** die thermoelektrische Folie mittelbar unter Zwischenanordnung einer Trennfolie und/oder eines Vlieses auf dem Faserhalbzeug positioniert wird.

5. Verfahren nach einem der Ansprüche 2 bis 4, **dadurch gekennzeichnet, dass** die thermoelektrische Folie auf einer zweiten Seite des Werkzeugs, die der ersten Seite desselben gegenüberliegt und vom Faserhalbzeug abgewandt ist, positioniert wird.

6. Verfahren nach einem der Ansprüche 1 bis 5, **dadurch gekennzeichnet, dass** die thermoelektrische Folie zusätzlich als Vakuumfolie wirkt, die gegenüber dem Werkzeug derart abgedichtet wird, dass zwischen dem Werkzeug und der thermoelektrischen Folie ein Unterdruck oder ein Vakuum einstellbar ist, wobei zur Aushärtung der Kunststoffmatrix des Faserhalbzeugs über die Mikrowellenbestrahlung zwischen dem Werkzeug und der thermoelektrischen Folie ein Unterdruck oder ein Vakuum eingestellt wird.

7. Verfahren nach einem der Ansprüche 1 bis 5, **dadurch gekennzeichnet, dass** zusätzlich zur thermoelektrische Folie eine separate Vakuumfolie verwendet und gegenüber dem Werkzeug derart abgedichtet wird, dass zwischen dem Werkzeug und der Vakuumfolie ein Unterdruck oder ein Vakuum einstellbar ist, und wobei zur Aushärtung der Kunststoffmatrix des Faserhalbzeugs über die Mikrowellenbestrahlung zwischen dem Werkzeug und Vakuumfolie ein Unterdruck oder ein Vakuum eingestellt wird.

8. Verfahren nach Anspruch 7, **dadurch gekennzeichnet, dass** die Vakuumfolie unmittelbar auf der thermoelektrischen Folie positioniert wird, wobei die thermoelektrische Folie zwischen der Vakuumfolie und dem Werkzeug positioniert ist.

9. Verfahren nach Anspruch 7, **dadurch gekennzeichnet, dass** die Vakuumfolie unmittelbar auf dem Faserhalbzeug positioniert wird, wobei das Werkzeug zwischen der der thermoelektrischen Folie und der Vakuumfolie positioniert ist.

10. Verfahren nach Anspruch 7, **dadurch gekennzeichnet, dass** die Vakuumfolie unmittelbar auf der Trennfolie oder dem Vlies positioniert wird, wobei das Werkzeug zwischen der der thermoelektrischen Folie und der Vakuumfolie positioniert ist.

11. Verfahren nach einem der Ansprüche 1 bis 10, **dadurch gekennzeichnet, dass** als thermoelektrische Folie eine segmentierte thermoelektrische Folie verwendet wird, die ausschließlich im Bereich von definierten ersten Segmenten durch die Mikrowellenbestrahlung erhitzt wird, wohingegen dieselbe im Bereich von definierten zweiten Segmenten nicht durch die Mikrowellenbestrahlung erhitzt wird.

## Claims

1. Method for producing a component from a fibre-reinforced material, a fibrous preform that consists of fibres and an uncured polymer matrix being positioned on a mould, **characterized in that** a thermoelectric film is positioned on the fibrous preform and/or on the mould, is heated up when a negative pressure or vacuum is applied by microwave irradiation and, as a consequence thereof, heats up the fibrous preform while curing the polymer matrix.

2. Method according to Claim 1, **characterized in that** the fibrous preform is positioned directly on a first side of the mould.

3. Method according to Claim 1 or 2, **characterized in that** the thermoelectric film is positioned directly on the fibrous preform.

4. Method according to Claim 1 or 2, **characterized in that** the thermoelectric film is positioned indirectly on the fibrous preform, with a separating film and/or a nonwoven interposed.

5. Method according to one of Claims 2 to 4, **characterized in that** the thermoelectric film is positioned on a second side of the mould, which is opposite from the first side of the same and is facing away from the fibrous preform.

6. Method according to one of Claims 1 to 5, **characterized in that** the thermoelectric film additionally acts as a vacuum film, which is sealed off with respect to the mould in such a way that a negative pressure or a vacuum can be set between the mould and the thermoelectric film, a negative pressure or a vacuum being set between the mould and the thermoelectric film for the curing of the polymer matrix of the fibrous preform by way of the microwave irradiation.

7. Method according to one of Claims 1 to 5, **characterized in that**, in addition to the thermoelectric film, a separate vacuum film is used and is sealed off with respect to the mould in such a way that a negative pressure or a vacuum can be set between the mould and the vacuum film, and a negative pressure or a vacuum being set between the mould and the vacuum film for the curing of the polymer matrix of the fibrous preform by way of the microwave irradiation.

8. Method according to Claim 7, **characterized in that** the vacuum film is positioned directly on the thermoelectric film, the thermoelectric film being positioned between the vacuum film and the mould.

9. Method according to Claim 7, **characterized in that** the vacuum film is positioned directly on the fibrous preform, the mould being positioned between the thermoelectric film and the vacuum film.

10. Method according to Claim 7, **characterized in that** the vacuum film is positioned directly on the separating film or the nonwoven, the mould being positioned between the thermoelectric film and the vacuum film.

11. Method according to one of Claims 1 to 10, **characterized in that** a segmented thermoelectric film, which is heated up by the microwave irradiation exclusively in the region of defined first segments, whereas it is not heated up by the microwave irradiation in the region of defined second segments, is used as the thermoelectric film.

## Revendications

1. Procédé de fabrication d'un composant en un matériau renforcé par des fibres, dans lequel on positionne sur un outil une ébauche de fibres, qui se compose de fibres et d'une matrice de matière plastique non durcie, **caractérisé en ce que** l'on positionne sur l'ébauche de fibres et/ou sur l'outil une feuille thermoélectrique, qui est chauffée par exposition à des micro-ondes avec application d'une dépression ou d'un vide et qui chauffe par conséquent l'ébauche de fibres avec durcissement de la matrice de matière plastique.

2. Procédé selon la revendication 1, **caractérisé en ce que** l'on positionne l'ébauche de fibres directement sur un premier côté de l'outil.

3. Procédé selon la revendication 1 ou 2, **caractérisé en ce que** l'on positionne la feuille thermoélectrique directement sur l'ébauche de fibres.

4. Procédé selon la revendication 1 ou 2, **caractérisé en ce que** l'on positionne la feuille thermoélectrique indirectement sur l'ébauche de fibres avec interposition d'une feuille de séparation et/ou d'un non-tissé.

5. Procédé selon l'une quelconque des revendications 2 à 4, **caractérisé en ce que** l'on positionne la feuille thermoélectrique sur un deuxième côté de l'outil, qui est disposé en face du premier côté de celui-ci et qui est situé à l'opposé de l'ébauche de fibres.

6. Procédé selon l'une quelconque des revendications 1 à 5, **caractérisé en ce que** la feuille thermoélectrique agit en outre comme une feuille de vide, qui est étanche par rapport à l'outil, de telle manière qu'une dépression ou un vide soit réglable entre l'outil et la feuille thermoélectrique, dans lequel on règle une dépression ou un vide entre l'outil et le feuille thermoélectrique pour le durcissement de la matrice de matière plastique de l'ébauche de fibres par l'exposition à des micro-ondes.

7. Procédé selon l'une quelconque des revendications 1 à 5, **caractérisé en ce que**, en plus de la feuille thermoélectrique, on utilise une feuille de vide séparée et on la rend étanche par rapport à l'outil, de telle manière qu'une dépression ou un vide soit réglable entre l'outil et la feuille de vide, dans lequel on règle une dépression ou un vide entre l'outil et la feuille de vide pour le durcissement de la matrice de matière plastique de l'ébauche de fibres par l'exposition à des micro-ondes.

8. Procédé selon la revendication 7, **caractérisé en ce que** l'on positionne la feuille de vide directement sur la feuille thermoélectrique, dans lequel la feuille thermoélectrique est positionnée entre la feuille de vide et l'outil.

9. Procédé selon la revendication 7, **caractérisé en ce que** l'on positionne la feuille de vide directement sur l'ébauche de fibres, dans lequel l'outil est positionné entre la feuille thermoélectrique et la feuille de vide.

10. Procédé selon la revendication 7, **caractérisé en ce que** l'on positionne la feuille de vide directement sur la feuille de séparation ou le non-tissé, dans lequel l'outil est positionné entre la feuille thermoélectrique et la feuille de vide.

11. Procédé selon l'une quelconque des revendications 1 à 10, **caractérisé en ce que** l'on utilise comme feuille thermoélectrique une feuille thermoélectrique segmentée, qui est chauffée par l'exposition à des micro-ondes exclusivement dans la région de premiers segments définis, et celle-ci n'est au contraire pas chauffée par l'exposition à des micro-ondes dans la région de deuxièmes segments définis.
